# EUROPEAN PATENT SPECIFICATION

(11) **EP 3 950 215 B1**
(45) Date of publication and mention of the grant of the patent: **11.01.2023**
(21) Application number: 21184938.5
(22) Date of filing: 12.07.2021
(51) Int. Cl.: B23Q 1/01, B23Q 11/00

(54) **MACHINE WITH A SAFETY SYSTEM**
MASCHINE MIT SICHERHEITSSYSTEM
MACHINE AVEC SYSTÊME DE SÉCURITÉ

(30) Priority: 07.08.2020 IT 202000019618
(43) Date of publication of application: 09.02.2022
(73) Proprietor: SCM Group S.p.A., 47921 Rimini (RN) (IT)
(72) Inventor: FERRI, Fabio, 47921 Rimini (IT)
(74) Representative: Tiburzi, Andrea

(56) References cited:
- WO-A1-2017/103811
- DE-A1-102004 041 821
- DE-U1-202009 007 035

## Description

The present invention relates to a machine equipped with a safety system, according to the preamble of claim 1 (see for example WO 2017/103811 A1).

More specifically, the invention relates to a machine equipped with a safety system operating in such a way as to avoid possible risks of impact for people circulating in the vicinity thereof, during its operation.

Specifically, this safety system is configured in such a way as to have appropriate measures for managing the risk of impact according to the specific position of the moving parts of the machine, and the position of the people who come to be in the vicinity of the machine itself.

In the following, the description will be directed to an edge-banding machine, but it is clear that it should not be considered limited to this specific type of machine, since the present invention can also be advantageously applied to machine tools of different kinds, suitable for carrying out operations or other types of machining.

Various safety systems for machine tools are known, which however exhibit various drawbacks and disadvantages mainly connected to the scarce flexibility of use of such systems and to the not always effective management of the risk of impact between people and the moving components of the machine tool.

In light of the above, it is, therefore, an object of the present invention providing a machine equipped with a safety system that is particularly effective in preventing impacts that could damage people's health.

Another object of the invention is to provide a machine equipped with a safety system that has a different but always safe operation, according to the position of the moving parts of the machine itself and the position of the people who are in the relative vicinity.

It is therefore specific object of the present invention a machine as defined in claim 1.

Preferably, according to the invention, said first sensor means are configured to detect, beforehand, the presence of a person in a second zone of access to said machine; said first zone being contained in said second zone; said first sensor means being operationally connected to said first moving and stopping means and to said second moving and stopping means in such a way that when a person accesses said second zone, said first sensor means transmit a signal to said first moving and stopping means and to said second moving and stopping means in order to keep stationary said transversal member and said at least one first operational element or to move said transversal member and/or said at least one first operational element at a predetermined speed.

Alternatively, according to the invention, said safety system comprises second sensor means to detect the presence of a person in a second zone of access to said machine; said first zone being contained in said second zone; said second sensor means being operationally connected to said first moving and stopping means and to said second moving and stopping means in such a way that when a person accesses said second zone, said second sensor means transmit a signal to said first moving and stopping means and to said second moving and stopping means in order to keep stationary said transversal member and said at least one first operational element or to move said transversal member and/or said at least one first operational element at a predetermined speed.

Preferably, according to the invention, said first zone has a variable shape according to the position of said transversal member along said first axis.

Advantageously according to the invention, said shape comprises a right-angled triangle with a first cathetus substantially parallel to said first axis and a second cathetus substantially parallel to said second axis and lying on a line passing through a zone occupied by said at least one first operational element.

Alternatively according to the invention, said shape may comprise a rectangle with a first side substantially parallel to said first axis and a second side substantially parallel to said second axis and lying on a line passing through a zone occupied by said at least one first operational element.

Further according to the invention, one end of said first cathetus or said first side may substantially match the position of said first sensor means.

Conveniently according to the invention, said machine may comprise at least one second operational element to perform at least one operation on said at least one panel or other workpiece placed on said work surface, said at least one second operational element being connected to said transversal member in a movable fashion along said second axis and being placed on said transversal member, preferably at the side of said transversal member opposite to said at least one first operational element.

Further according to the invention, said at least one first operational element may be configured to perform edging on said at least one panel or other workpiece, and said at least one second operational element is configured to perform milling or cutting or drilling or sanding on said at least one panel or another workpiece.

Preferably according to the invention, said machine comprises a protective structure integral with said transversal member and in that said at least a second operational element is contained inside said protective structure.

Advantageously according to the invention, said protective structure may comprise at least one pressure or contact sensor to detect, in use, an impact of said protective structure with a person.

Preferably according to the invention, said first sensor means are arranged at a central zone of the maximum stroke which can be executed by said transversal member along said first axis.

Conveniently according to the invention, said first sensor means may comprise at least one laser-type scanning sensor.

The present invention will be now described, for illustrative but not limitative purposes, according to its preferred embodiments, with particular reference to the figures of the enclosed drawings, wherein:
figure 1 is an isometric view of a machine according to the present invention, in a first configuration;
figure 2 is an isometric view of the machine shown in figure 1, in a second configuration;
figure 3 is a top plan view of the machine shown in figures 1 and 2, in said first configuration;
figure 4 is a top plan view of the machine of figures 1-3, in a third configuration;
figure 5 is a top plan view of the machine of figures 1-4, in said second configuration; and
figure 6 is a top plan view of the machine of figures 1-5, in a fourth configuration.

In the various figures, similar parts will be indicated with the same numerical references.

With reference to the attached figures, with 1 it is indicated a machine equipped with an edge-banding unit, namely a machine with a machining unit for applying edge-banding elements on panels or similar workpieces.

This machine 1 comprises a base 2, on which a work surface 3 is provided, on which the workpieces to be worked are placed and fixed.

Above the work surface 3 there is a bridge 4, which is movable along a first axis X by means of first movement means, and oriented according to a second axis Y, orthogonal to said first axis X.

On a first side 4a of the bridge 4 there is mounted, in a movable way, an edge-banding unit 5, namely a unit for the application of edge-band elements on a panel or other workpiece.

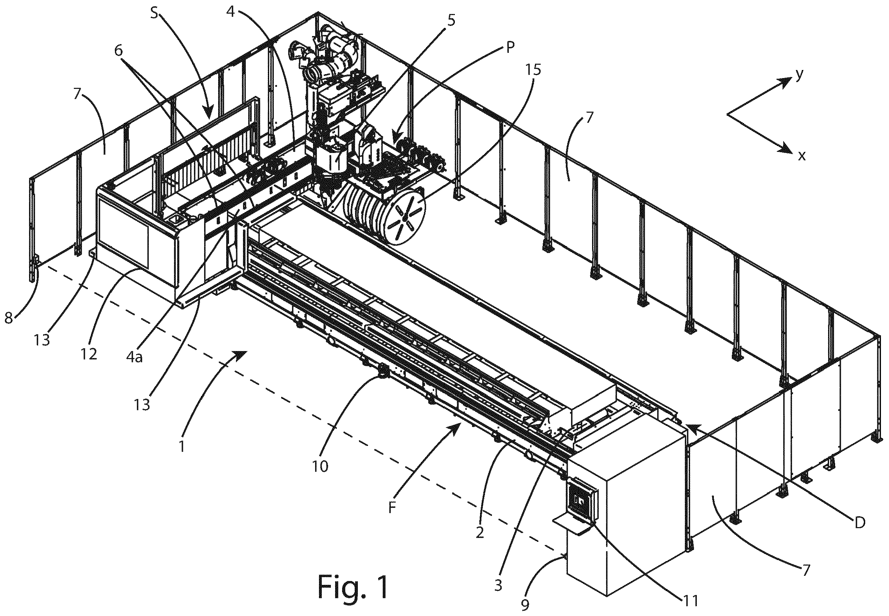

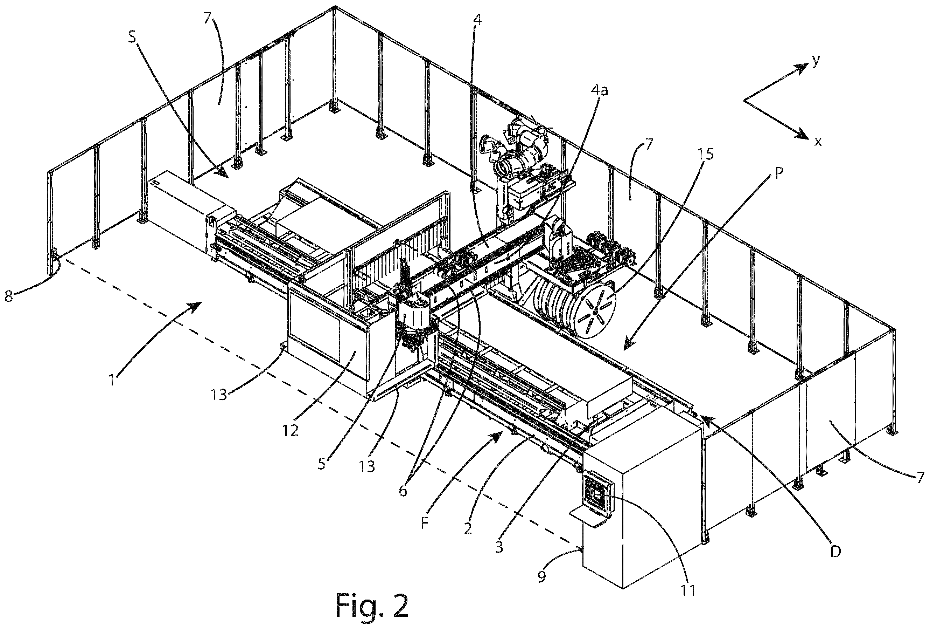

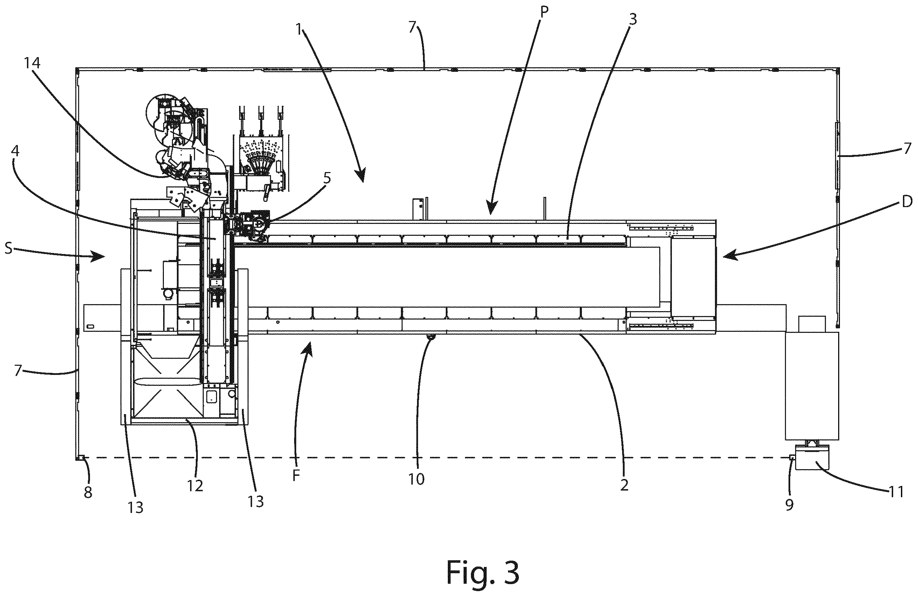

In particular, with respect to the bridge 4, the edge-banding unit 5 is movable, by means of second movement means, along the second axis Y between a first end position, corresponding to a rear position (see figures 1 and 3), and a second end-of-stroke position, corresponding to an advanced position (see figures 2, 4, 5, and 6), respectively identified at the opposite ends of the bridge 4.

The movement of the edge-banding unit 5 along the bridge 4, or along the second axis Y, is guided by guides 6 on the first side 4a of the bridge 4, which faces the edge-banding unit 5 itself.

The machine 1 also comprises a magazine 15 for the edge-manding elements to be applied on the workpieces by means of the aforementioned edge-banding unit 5.

Said magazine 15 can be mounted on the bridge 4, as shown in the attached figures, or installed, in a fixed position, on the ground.

A protective structure 12 is rigidly connected to the bridge 4 and is therefore movable integrally with it along the first axis X.

In particular, this protective structure 12 is arranged adjacent to the base 2, in correspondence with the front side F of the machine 1, so as to provide a cover, or a protection, on the side of the bridge 4 corresponding to said front side F, and also on a second side 4b of the bridge 4, opposite the aforementioned first side 4a, thus preventing, at any time, the access from these two sides to the area occupied by the bridge 4 itself.

As shown in the attached figures, the protective structure 12 can have a shape such that the edge-banding unit 5 is partially external to it.

On the outside of the two opposite sides of the protective structure 12, oriented according to the aforementioned second axis Y, there is a respective bumper, i.e., a soft bumper element 13 equipped with at least one pressure sensor, i.e., a contact sensor, to detect a possible collision of the same protective structure 12 with a person.

The machine 1 also comprises a control unit 11, operatively connected to the aforementioned first movement means and second movement means, to control and command the movement and the blocking, where provided, of the bridge 4 along the first axis X, and of the edge-banding unit 5 along the second axis Y.

In correspondence with the left side S, the right side D and the rear side P of the machine 1, a protective fence 7 is also provided, to prevent access to the relevant areas of the machine 1 by operators or other people.

This protective fence 7 is therefore configured in such a way as to allow access to the machine 1 only from the front side F of the latter.

Referring again to the aforementioned edge-banding unit 5, in its first end-of-stroke position, distal with respect to the front side F of the machine 1 (see figures 1 and 3), the same edge-banding unit 5 is arranged at the rear side P of the machine 1; while, in its second end-of-stroke position, proximal to the front side F of the machine 1 (see figures 2, 4, 5 and 6), the edge-banding unit 5 is in correspondence with the same front side F, in such a position to protrude from the front of the latter and laterally from the aforementioned protective structure 12, thus constituting a danger for the people circulating in the immediate neighborhood of the machine 1.

A pair of photocells 8, 9, or respectively a transmitter and a receiver, are mounted in correspondence with the free ends of the protective fence 7, which protrude from the front side F of the machine 1, operatively connected to the control unit 11.

The beam defined by the two photocells 8, 9 mounted respectively on the left side and on the right side of the protective fence 7, together with these two sides of this protective fence 7, defines a first access zone Z1 at the front side F of the machine 1, accessible by operators and other people.

Furthermore, on the side of the base 2 facing the front side of the machine 1, preferably in the relative center-line area, a laser scanner 10, or a 3D-laser, is provided to scan a second access area Z2 of variable shape, between the aforementioned first access zone Z1, and the side of the base 2, on which the laser scanner is installed 10.

In particular, this laser scanner 10 is installed in correspondence of a central area between the two opposite end-of-stroke positions of the bridge 4 along the first axis X.

The laser scanner 10 is also operatively connected to the control unit 11 of the machine 1.

In particular, the shape of the second access zone Z2 scanned by the laser scanner 10 is defined continuously, i.e., moment by moment, by the laser scanner 10 itself, as a function of the position assumed by the bridge 4 along the first axis X.

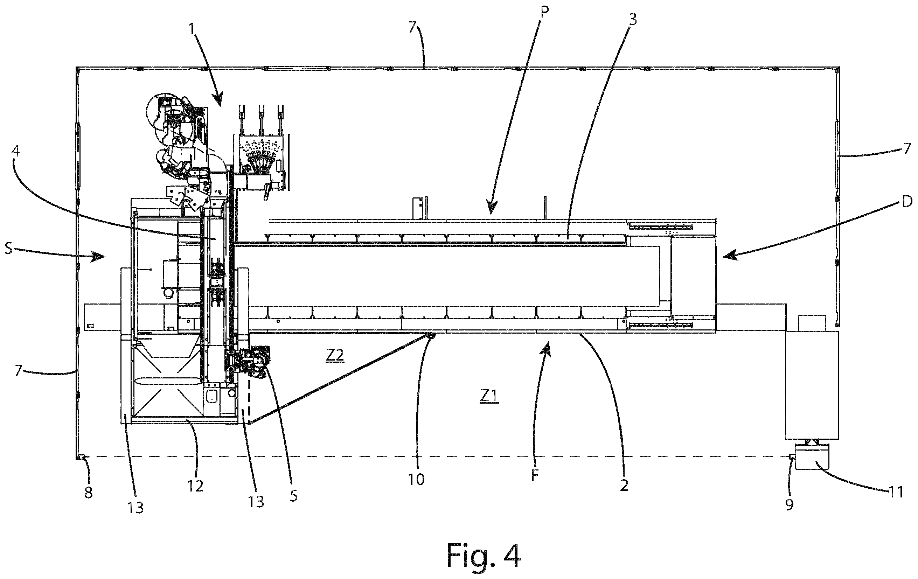

Specifically, if the bridge 4 is in the end-of-stroke position, according to the first axis X, opposite the edge-banding unit 5 with respect to the same bridge 4 (see figure 4), the shape of the second access zone Z2 substantially appears as a right triangle with a first cathetus parallel to the first X axis and adjacent to the front side of the base 2, a second cathetus, parallel to the second Y axis and passing through an area adjacent to the position of the edge-banding unit 5, and the hypotenuse joining the ends of said two catheti.

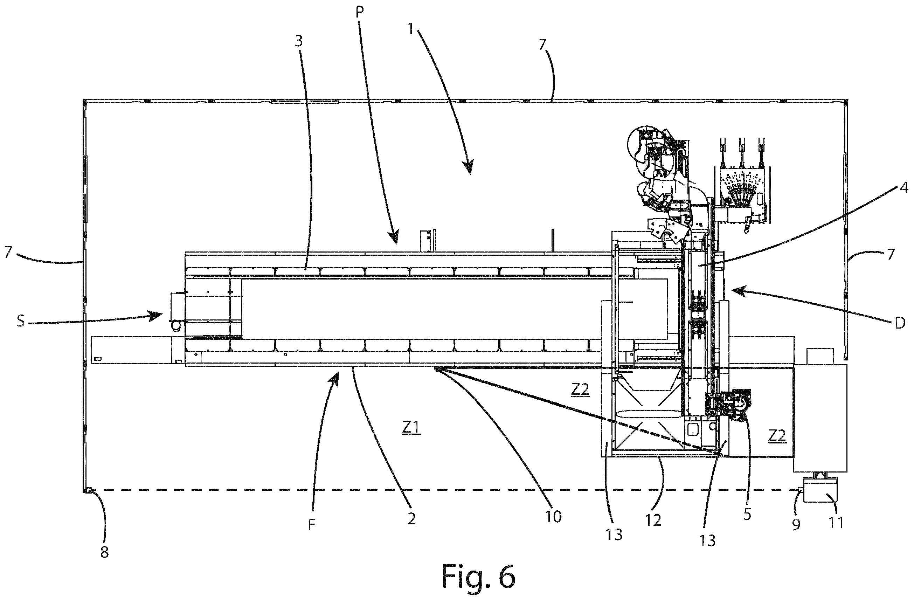

If, on the other hand, the bridge 4 is in the other end-of-stroke position according to the first axis X, or in the end-of-stroke position provided on the same side of the edge-banding unit 5 (see figure 6), the shape of the second access zone Z2 is substantially presented as the composition of a right triangle, having a first cathetus parallel to the first X-axis and adjacent to the front side of the base 2, a second cathetus parallel to the second Y-axis and passing through an area occupied by the edge-banding unit 5, and the hypotenuse joining the ends of said two catheti, and a rectangle or square having one side matching with said second cathetus.

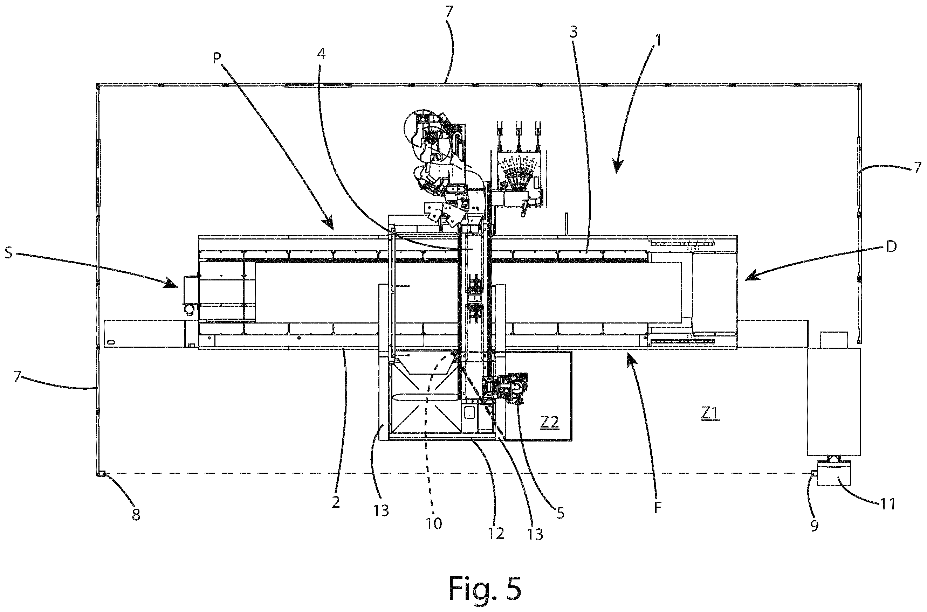

When the bridge 4 is in any intermediate position between the two end-of-stroke positions provided along the first axis X (see figure 5), the shape of the second access zone Z2 is, also in this case, substantially as the composition of a right triangle, having a first cathetus parallel to the first X-axis and adjacent to the front side of the base 2, a second cathetus parallel to the second Y-axis and passing through an area occupied by the edge-banding unit 5, and the hypotenuse joining the ends of said two catheti, and a rectangle or square having one side matching with said second side.

In any case, regardless of the position assumed by the bridge 4 along the first X-axis, the vertex of the aforementioned right triangle formed by the hypotenuse and the cathetus parallel to the first X-axis substantially matches with the position of the laser scanner 10.

According to further variants of the present invention, the second access zone Z2, continuously scanned by the laser scanner 10, has a polygonal shape, preferably rectangular, which varies according to the position of the bridge 4 according to the first axis X.

If this second access zone Z2 has the shape of a rectangle, the latter will have a first side substantially parallel to the first axis X, and a second side substantially parallel to the second axis Y, and lying on a line passing through a zone occupied by from the edge-banding unit 5.

The machine 1 also comprises an operating head 14 mounted, in a movable way, along the second axis Y, on the side of the bridge 4, opposite to the edge-banding unit 5.

The same operating head 14 is also arranged inside the aforementioned protective structure 12.

This operating head 14 is provided with an electrospindle configured to removably accommodate tools of various kinds, for example, tools for carrying out cutting, milling, drilling, or polishing operations.

This operating head 14 can be a head with five, six, or more movement axes (three linear axes: X, Y, Z; and one, two, or more rotational axes).

The tools that can be coupled to the electrospindle of the operating head 14 can be arranged in and picked up from a suitable magazine.

For the purposes of the present invention, as an alternative to the aforementioned laser scanner 10, a radar, or a 3D camera, or even another type of scanning system can be used.

According to a further embodiment of the present invention, the aforementioned second access zone Z2 has a fixed shape, therefore invariant with respect to the position of the bridge 4 along the first axis X, and the position of the edge-banding unit 5 along the second axis Y.

For example, the aforementioned second access zone Z2 could have a substantially rectangular fixed shape, comprised between the first access zone Z1, and the machine 1 itself.

Furthermore, the present invention also covers cases where, in place of the aforementioned edge-banding unit 5, a different operating member or device is provided, which is suitable for performing at least one operation or machining on a workpiece.

When an operator or any other person accesses the first access zone Z1 from the front side F of the machine 1 by crossing the beam of the photocells 8, 9, the latter transmit a signal to the control unit 11 to command the displacement speed reduction of the bridge 4 along the first axis X, if already in movement, at a predetermined allowed value of speed, normally equal to about 25 m/min.

In case of the same operator or the same person as above accesses from the first access zone Z1 to the second access zone Z2, when the edge-banding unit 5 is in the aforementioned advanced position with respect to the bridge 4, regardless of the position occupied by the latter along the first axis X, the laser scanner 10 immediately transmits a corresponding signal to the control unit 11, to command the stop of the bridge 4 and/or of the edge-banding unit 5.

In accordance with a preferred embodiment of the present invention, the above-described functions performed by the photocells 8, 9 can be performed by the laser scanner 10 itself, making superfluous, in this case, the use of these photocells 8, 9.

In this case, the laser scanner 10 monitors the first access zone Z1 and, when it detects the access of an operator in the zone Z1 itself, it transmits a signal to the control unit 11, to command a reduction in the speed of movement of the bridge 4 along the first axis X, if already in motion, at a predetermined allowed speed value, normally equal to about 25 m/min.

In case of the same operator or the same person as above accesses from the first access zone Z1 to the second access zone Z2 when the edge-banding unit 5 is in the aforementioned advanced position with respect to the bridge 4, regardless of the position occupied by the latter along the first axis X, the laser scanner 10 immediately transmits a corresponding signal to the control unit 11, to command the stop of the bridge 4 and/or of the edge-banding unit 5.

According to a further embodiment of the present invention, not illustrated in the attached figures, the machine and the protective fence described above can be configured in such a way that two mutually opposite access sides are defined, for accessing the machine itself; in this case, the safety system described above (which provides for the use of the laser scanner 10 and, possibly, also of the photocells 8, 9) is provided on both the aforementioned access sides to the machine.

From the foregoing description, it is possible to deduce how the aforementioned safety system operates effectively and safely for people in any circumstance, or in all the operating phases of the machine.

In particular, for the management of the impact risk, this safety system constantly takes into account the actual position of the moving parts of the machine, as well as the position of the people circulating in the vicinity of the latter.

This determines a constantly adequate level of safety for people, without an undue reduction in the productivity level of the machine.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (1) to perform at least one operation on at least one panel or other workpiece, in said machine (1) being defined an access side (F), said machine (1) comprising:
- a work surface (3) to receive at least one panel or other workpiece;
- a transversal member (4) movable, according to a first axis (X), above said work surface (3);
- first moving and stopping means to move said transversal member (4) according to said first axis (X) and to stop said transversal member (4);
- at least one first operational element (5) to perform at least one operation on said at least one panel or other workpiece placed on said work surface (3), said at least one first operational element (5) being connected to said transversal member (4) in a movable fashion along a second axis (Y), substantially orthogonal to said first axis (X), between a withdrawn position, distal from said access side (F), and an advanced position, proximal to said access side (F);
- second moving and stopping means to move said at least one first operational element (5) along said second axis (Y) with respect to said transversal member (4) and to stop said at least one first operational element (5); and
- a safety system comprising:
first sensor means (10) to detect the presence of a person in a first zone (Z2) adjacent to said access side (F) of said machine (1), said first sensor means (10) being operationally connected to said first moving and stopping means and to said second moving and stopping means in such a way that said first sensor means (10) transmit a signal to said first moving and stopping means and to said second moving and stopping means to stop said transversal member (4) and/or said at least one first operational element (5) when they detect that at least one person is present in said first zone (Z2) and that said at least one first operational element (5) is in said advanced position,
**characterised in that** the safety system further comprises:
- detection means to detect whether said at least one first operational element (5) is in said withdrawn position or in said advanced position with respect to said transversal member (4);
- said first sensor means (10) being operationally connected to said detection means.

2. Machine (1) according to claim 1, **characterized in that** said first sensor means (10) are configured to detect, beforehand, the presence of a person in a second zone (Z1) of access to said machine (1); said first zone (Z2) being contained in said second zone (Z1); said first sensor means (10) being operationally connected to said first moving and stopping means and to said second moving and stopping means in such a way that when a person accesses said second zone (Z1), said first sensor means (10) transmit a signal to said first moving and stopping means and to said second moving and stopping means in order to keep stationary said transversal member (4) and said at least one first operational element (5) or to move said transversal member (4) and/or said at least one first operational element (5) at a predetermined speed.

3. Machine (1) according to claim 1, **characterized in that** said safety system comprises second sensor means (8, 9) to detect the presence of a person in a second zone (Z1) of access to said machine (1); said first zone (Z2) being contained in said second zone (Z1); said second sensor means (8, 9) being operationally connected to said first moving and stopping means and to said second moving and stopping means in such a way that when a person accesses said second zone (Z1), said second sensor means (8, 9) transmit a signal to said first moving and stopping means and to said second moving and stopping means in order to keep stationary said transversal member (4) and said at least one first operational element (5) or to move said transversal member (4) and/or said at least one first operational element (5) at a predetermined speed.

4. Machine (1) according to any one of the preceding claims, **characterized in that** said first zone (Z2) has a variable shape according to the position of said transversal member (4) along said first axis (X).

5. Machine (1) according to claim 4, **characterized in that** said shape comprises a right-angled triangle with a first cathetus substantially parallel to said first axis (X) and a second cathetus substantially parallel to said second axis (Y) and lying on a line passing through a zone occupied by said at least one first operational element (5).

6. Machine (1) according to claim 4, **characterized in that** said shape comprises a rectangle with a first side substantially parallel to said first axis (X) and a second side substantially parallel to said second axis (Y) and lying on a line passing through a zone occupied by said at least one first operational element (5).

7. Machine (1) according to claim 5 or 6, **characterized in that** one end of said first cathetus or said first side substantially matches the position of said first sensor means (10).

8. Machine (1) according to any one of the preceding claims, **characterized in that** it comprises at least one second operational element (14) to perform at least one operation on said at least one panel or other workpiece placed on said work surface (3), said at least one second operational element (14) being connected to said transversal member (4) in a movable fashion along said second axis (Y) and being placed on said transversal member (4), preferably at the side of said transversal member (4) opposite to said at least one first operational element (5).

9. Machine (1) according to claim 8, **characterized in that** said at least one first operational element (5) is configured to perform edging on said at least one panel or other workpiece, and **in that** said at least one second operational element (14) is configured to perform milling or cutting or drilling or sanding on said at least one panel or other workpiece.

10. Machine (1) according to claim 8 or 9, **characterized in that** it comprises a protective structure (12) integral with said transversal member (4) and **in that** said at least a second operational element (14) is contained inside said protective structure (12).

11. Machine (1) according to claim 10, **characterized in that** said protective structure (12) comprises at least one pressure or contact sensor to detect, in use, an impact of said protective structure (12) with a person.

12. Machine (1) according to any one of the preceding claims, **characterized in that** said first sensor means (10) are arranged at a central zone of the maximum stroke which can be executed by said transversal member (4) along said first axis (X).

13. Machine (1) according to any one of the preceding claims, **characterized in that** said first sensor means comprises at least one laser-type scanning sensor (10).

## Patentansprüche

1. Maschine (1) zum Durchführen mindestens eines Vorgangs an mindestens einer Platte oder einem anderen Werkstück, wobei in der besagten Maschine (1) eine Zugangsseite (F) definiert ist, wobei die besagte Maschine (1) umfasst:
- eine Arbeitsoberfläche (3), um wenigstens eine Platte oder anderes Werkstück aufzunehmen;
- ein transversales Bauteil (4), das entlang einer ersten Achse (X) über der besagten Arbeitsoberfläche (3) beweglich ist;
- erste Elemente zur Bewegung und zum Anhalten, um das besagte transversale Bauteil (4) entlang der besagten ersten Achse (X) zu bewegen und das besagte transversale Bauteil (4) anzuhalten;
- mindestens ein erstes Betätigungselement (5) zum Durchführen mindestens eines Vorgangs an der besagten mindestens einen Platte oder dem anderen auf der besagten Arbeitsfläche (3) platzierten Werkstück, wobei das besagte mindestens eine erste Betätigungselement (5) mit dem besagten transversalen Bauteil (4) verbunden ist, beweglich entlang einer zweiten Achse (Y) angeordnet, die im Wesentlichen orthogonal zu der ersten Achse (X) ist, zwischen einer zurückgezogenen Position, distal von der Zugangsseite (F), und einer vorgeschobenen Position, proximal zu der Zugangsseite (F);
- zweite Bewegungs- und Stoppeinrichtung zum Bewegen des mindestens einen ersten Betriebselements (5) entlang der zweiten Achse (Y) in Bezug auf das transversale Bauteil (4) und zum Stoppen des besagten mindestens einen ersten Betriebselements (5); und
- ein Sicherheitssystem, umfassend:
ein erstes Sensormittel (10) zum Erfassen der Anwesenheit einer Person in einer ersten Zone (Z2) angrenzend an die besagte Zugangsseite (F) der besagten Maschine (1),
wobei das besagte erste Sensormittel (10) mit der ersten Bewegungs- und Stoppeinrichtung und mit der besagten zweiten Bewegungs- und Stoppeinrichtung derart betriebsmäßig verbunden ist, dass das besagte erste Sensormittel
(10) ein Signal an die besagte erste Bewegungs- und Stoppeinrichtung und an die besagte zweite Bewegungs- und Stoppeinrichtung überträgt, um das besagte transversale Bauteil (4) und/oder das besagte mindestens eine erste Betriebselement (5) anzuhalten, wenn erkannt wird, dass mindestens eine Person in der besagten ersten Zone (Z2) anwesend ist und das besagte wenigstens eine Betriebselement (5) in der besagten vorgeschobenen Position ist, **dadurch gekennzeichnet, dass** das Sicherheitssysteme außerdem umfasst:
- Erfassungsmittel zum Erfassen, ob sich das besagte mindestens eine erste Betriebselement (5) in der besagten zurückgezogenen Position oder in der besagten vorgeschobenen Position in Bezug auf das transversale Bauteil (4) befindet;
- besagtes erstes Sensormittel (10) ist mit dem besagten Erfassungsmittel betriebsmäßig verbunden.

2. Maschine (1) nach Anspruch 1, **dadurch gekennzeichnet, dass** das besagte erste Sensormittel (10) so konfiguriert ist, das es im Voraus die Anwesenheit einer Person in einer zweiten Zugangszone (Z1) zu der besagten Maschine (1) erfasst; wobei die besagte erste Zone (Z2) in der besagten zweiten Zone (Z1) enthalten ist; wobei das besagte erste Sensormittel (10) mit der besagten ersten Bewegungs- und Stoppeinrichtung und mit der besagten zweiten Bewegungs- und Stoppeinrichtung derart betriebsmäßig verbunden ist, dass das besagte erste Sensormittel (10) ein Signal an die besagte erste Bewegungs- und Stoppeinrichtung und an die besagte zweite Bewegungs- und Stoppeinrichtung überträgt, wenn eine Person die besagte zweite Zone (Z1) betritt, um das besagte transversale Bauteil (4) und das besagte mindestens eine erste Betriebselement (5) bewegungslos zu halten oder das besagte transversale Bauteil (4) und/oder das besagte mindestens eine erste Betriebselement (5) mit einer vorbestimmten Geschwindigkeit zu bewegen.

3. Maschine (1) nach Anspruch 1, **dadurch gekennzeichnet, dass** das besagte Sicherheitssystem zweite Sensormittel (8, 9) enthält, um die Anwesenheit einer Person in einer zweiten Zugangszone (Z1) zu der besagten Maschine (1) zu erfassen; wobei die besagte erste Zone (Z2) in der besagten zweiten Zone (Z1) enthalten ist; wobei die besagten zweiten Sensormittel (8, 9) mit der besagten ersten Bewegungs- und Stoppeinrichtung und mit der besagten zweiten Bewegungs- und Stoppeinrichtung derart betriebsmäßig verbunden sind, dass die besagten zweiten Sensormittel (8, 9) ein Signal an die besagte erste Bewegungs- und Stoppeinrichtung und an die besagte zweite Bewegungs- und Stoppeinrichtung übertragen, wenn eine Person die besagte zweite Zone (Z1) betritt, um das besagte transversale Bauteil (4) und das besagte mindestens eine erste Betriebselement (5) bewegungslos zu halten oder das besagte transversale Bauteil (4) und/oder das besagte mindestens eine erste Betriebselement (5) mit einer vorbestimmten Geschwindigkeit zu bewegen.

4. Maschine (1) nach einem der vorhergehenden Ansprüche, **dadurch gekennzeichnet, dass** die besagte erste Zone (Z2) eine veränderliche Form gemäß der Position des besagten transversalen Bauteils (4) entlang der ersten Achse (X) hat.

5. Maschine (1) nach Anspruch 4, **dadurch gekennzeichnet, dass** die besagte Form ein rechtwinkliges Dreieck mit einer ersten Kathete im Wesentlichen parallel zu der besagten ersten Achse (X) und einer zweiten Kathete im Wesentlichen parallel zu der besagten zweiten Achse (Y) umfasst und auf einer Linie liegt, die durch eine Zone verläuft, die von dem besagten mindestens einen ersten Betriebselement (5) besetzt ist.

6. Maschine (1) nach Anspruch 4, **dadurch gekennzeichnet, dass** die besagte Form ein Rechteck mit einer ersten Seite im Wesentlichen parallel zu der besagten ersten Achse (X) und eine zweite Seite im Wesentlichen parallel zu der besagten zweiten Achse (Y) umfasst und auf einer Linie liegt, die durch eine Zone verläuft, die von dem besagten mindestens einen ersten Betriebselement (5) besetzt ist.

7. Maschine (1) nach Anspruch 5 oder 6, **dadurch gekennzeichnet, dass** ein Ende der besagten ersten Kathete oder der besagten ersten Seite im Wesentlichen mit der Position des besagten ersten Sensormittels (10) übereinstimmt.

8. Maschine (1) nach einem der vorhergehenden Ansprüche, **dadurch gekennzeichnet, dass** sie mindestens ein zweites Betriebselement (14) umfasst, um mindestens einen Vorgang an der besagten mindestens einen Platte oder dem anderen auf der besagten Arbeitsfläche (3) platzierten Werkstück durchzuführen, wobei das besagte mindestens eine zweite Betätigungselement (14) entlang der besagten zweiten Achse (Y) beweglich mit dem besagten transversalen Bauteil (4) verbunden ist und auf dem besagten transversalen Bauteil (4) angeordnet ist, vorzugsweise an der Seite des besagten transversalen Bauteils (4) gegenüber dem besagten mindestens einen ersten Betriebselement (5).

9. Maschine (1) nach Anspruch 8, **dadurch gekennzeichnet, dass** das besagte mindestens eine erste Betriebselement (5) so konfiguriert ist, dass es Kantenbearbeitung an der besagten mindestens einen Platte oder anderen Werkstück durchführt, und dass das besagte mindestens eine zweite Betriebselement (14) konfiguriert ist, um Fräsen oder Schneiden oder Bohren oder Schleifen an der besagten mindestens einen Platte oder anderen Werkstück durchzuführen.

10. Maschine (1) nach Anspruch 8 oder 9, **dadurch gekennzeichnet, dass** sie eine mit dem besagten transversalen Bauteil (4) integrale Schutzstruktur (12) umfasst und dadurch, dass das besagte mindestens eine zweite Betriebselement (14) innerhalb der besagten Schutzstruktur (12) enthalten ist.

11. Maschine (1) nach Anspruch 10, **dadurch gekennzeichnet, dass** besagte Schutzstruktur (12) mindestens einen Druck- oder Kontaktsensor umfasst, um im Gebrauch einen Aufprall der besagten Schutzstruktur (12) auf eine Person zu erfassen.

12. Maschine (1) nach einem der vorhergehenden Ansprüche, **dadurch gekennzeichnet, dass** die besagten ersten Sensormittel (10) in einem zentralen Bereich des maximalen Hubs angeordnet sind, der von dem besagten transversalen Bauteil (4) entlang der besagten ersten Achse (X) ausgeführt werden kann.

13. Maschine (1) nach einem der vorhergehenden Ansprüche, **dadurch gekennzeichnet, dass** das besagte erste Sensormittel zumindest einen scanfähigen Sensor des Lasertyps (10) umfasst.

## Revendications

1. Machine (1) pour effectuer au moins une opération sur au moins un panneau ou une autre pièce, un côté d'accès (F) étant défini dans ladite machine (1), ladite machine (1) comprenant:
- une surface de travail (3) pour recevoir au moins un panneau ou une autre pièce;
- un élément transversal (4) mobile, selon un premier axe (X), au-dessus de ladite surface de travail (3);
- des premiers moyens de déplacement et d'arrêt pour déplacer ledit élément transversal (4) selon ledit premier axe (X) et pour arrêter ledit élément transversal (4);
- au moins un premier élément opérationnel (5) pour effectuer au moins une opération sur ledit au moins un panneau ou une autre pièce, placés sur ladite surface de travail (3), ledit au moins un premier élément opérationnel (5) étant relié audit élément transversal (4) de manière mobile le long d'un deuxième axe (Y), sensiblement orthogonal audit premier axe (X), entre une position retirée, distale dudit côté d'accès (F), et une position avancée, proximale dudit côté d'accès (F) ;
- des deuxièmes moyens de déplacement et d'arrêt pour déplacer ledit au moins un premier élément opérationnel (5) le long dudit deuxième axe (Y) par rapport audit élément transversal (4) et pour arrêter ledit au moins un premier élément opérationnel (5); et
- un système de sécurité comprenant:
des premiers capteurs (10) pour détecter la présence d'une personne dans une première zone (Z2) adjacente audit côté d'accès (F) de ladite machine (1),
lesdits premiers capteurs (10) étant connectés de manière opérationnelle auxdits premiers moyens de déplacement et d'arrêt et auxdits deuxièmes moyens de déplacement et d'arrêt de telle manière que lesdits premiers capteurs (10) transmettent un signal auxdits premiers moyens de déplacement et d'arrêt et auxdits deuxièmes moyens de déplacement et d'arrêt pour arrêter ledit élément transversal (4) et/ou ledit au moins un premier élément opérationnel (5) lorsqu'ils détectent qu'au moins une personne est présente dans ladite première zone (Z2) et que ledit au moins un premier élément opérationnel (5) est dans ladite position avancée, **caractérisée en ce que** le système de sécurité comprend en outre:
- des moyens de détection pour détecter si ledit au moins un premier élément opérationnel (5) est dans ladite position retirée ou dans ladite position avancée par rapport audit élément transversal (4);
- lesdits premiers capteurs (10) étant connectés de manière opérationnelle auxdits moyens de détection.

2. Machine (1) selon la revendication 1, **caractérisée en ce que** lesdits premiers capteurs (10) sont configurés pour détecter, au préalable, la présence d'une personne dans une deuxième zone (Z1) d'accès à ladite machine (1); ladite première zone (Z2) étant contenue dans ladite deuxième zone (Z1); lesdits premiers capteurs (10) étant connectés de manière opérationnelle auxdits premiers moyens de déplacement et d'arrêt et auxdits deuxièmes moyens de déplacement et d'arrêt de telle sorte que lorsqu'une personne accède à ladite deuxième zone (Z1), lesdits premiers capteurs (10) transmettent un signal auxdits premiers moyens de déplacement et d'arrêt et auxdits deuxièmes moyens de déplacement et d'arrêt afin de maintenir stationnaire ledit élément transversal (4) et ledit au moins un premier élément opérationnel (5) ou de déplacer ledit élément transversal (4) et/ou ledit au moins un premier élément opérationnel (5) à une vitesse prédéterminée.

3. Machine (1) selon la revendication 1, **caractérisée en ce que** ledit système de sécurité comprend des deuxièmes capteurs (8,9) pour détecter la présence d'une personne dans une deuxième zone (Z1) d'accès à ladite machine (1); ladite première zone (Z2) étant contenue dans ladite deuxième zone (Z1); lesdits deuxièmes capteurs (8,9) étant connectés de manière opérationnelle auxdits premiers moyens de déplacement et d'arrêt et auxdits deuxièmes moyens de déplacement et d'arrêt de telle sorte que lorsqu'une personne accède à ladite deuxième zone (Z1), lesdits deuxièmes capteurs (8,9) transmettent un signal auxdits premiers moyens de déplacement et d'arrêt et auxdits deuxièmes moyens de déplacement et d'arrêt afin de maintenir stationnaire ledit élément transversal (4) et ledit au moins un premier élément opérationnel (5) ou de déplacer ledit élément transversal (4) et/ou ledit au moins un premier élément opérationnel (5) à une vitesse prédéterminée.

4. Machine (1) selon l'une quelconque des revendications précédentes, **caractérisée en ce que** ladite première zone (Z2) a une forme variable selon la position dudit élément transversal (4) le long dudit premier axe (X).

5. Machine (1) selon la revendication 4, **caractérisée en ce que** ladite forme comprend un triangle rectangle avec une première cathète sensiblement parallèle audit premier axe (X) et une deuxième cathète sensiblement parallèle audit deuxième axe (Y) et se trouvant sur une ligne passant par une zone occupée par ledit au moins un premier élément opérationnel (5).

6. Machine (1) selon la revendication 4, **caractérisée en ce que** ladite forme comprend un rectangle avec un premier côté sensiblement parallèle audit premier axe (X) et un deuxième côté sensiblement parallèle audit deuxième axe (Y) et se trouvant sur une ligne passant par une zone occupée par ledit au moins un premier élément opérationnel (5).

7. Machine (1) selon la revendication 5 ou 6, **caractérisée en ce qu'**une extrémité de ladite première cathète ou dudit premier côté correspond sensiblement à la position desdits premiers capteurs (10).

8. Machine (1) selon l'une quelconque des revendications précédentes, **caractérisée en ce qu'**elle comprend au moins un deuxième élément opérationnel (14) pour effectuer au moins une opération sur ledit au moins un panneau ou une autre pièce, placés sur ladite surface de travail (3), ledit au moins un deuxième élément opérationnel (14) étant relié audit élément transversal (4) de manière mobile le long dudit deuxième axe (Y) et étant placé sur ledit élément transversal (4), de préférence sur le côté dudit élément transversal (4) opposé audit au moins un premier élément opérationnel (5).

9. Machine (1) selon la revendication 8, **caractérisée en ce que** ledit au moins un premier élément opérationnel (5) est configuré pour effectuer un délignage sur ledit au moins un panneau ou une autre pièce, et **en ce que** ledit au moins un deuxième élément opérationnel (14) est configuré pour effectuer un fraisage ou une coupe ou un perçage ou un ponçage sur ledit au moins un panneau ou une autre pièce.

10. Machine (1) selon la revendication 8 ou 9, **caractérisée en ce qu'**elle comprend une structure de protection (12) solidaire dudit élément transversal (4) et **en ce que** ledit au moins un deuxième élément opérationnel (14) est contenu à l'intérieur de ladite structure de protection (12).

11. Machine (1) selon la revendication 10, **caractérisée en ce que** ladite structure de protection (12) comprend au moins un capteur de pression ou de contact pour détecter, en cours d'utilisation, un impact de ladite structure de protection (12) avec une personne.

12. Machine (1) selon l'une quelconque des revendications précédentes, **caractérisée en ce que** lesdits premiers capteurs (10) sont disposés au niveau d'une zone centrale de la course maximale qui peut être exécutée par ledit élément transversal (4) le long dudit premier axe (X).

13. Machine (1) selon l'une quelconque des revendications précédentes, **caractérisée en ce que** lesdits premiers capteurs comprennent au moins un capteur à balayage laser (10).
